# FASCICULE DE BREVET EUROPEEN

(11) **EP 1 876 935 B1**
(45) Date de publication et mention de la délivrance du brevet: **03.09.2008**
(21) Numéro de dépôt: 06726098.4
(22) Date de dépôt: 15.03.2006
(51) Int. Cl.: A47J 45/06, A47J 43/28, A47J 36/06

(54) **ARTICLES CULINAIRES EMPILABLES, COUVERCLE ET ACCESSOIRE ADAPTES**
STAPELBARE KOCHUTENSILIEN UND DAFÜR AUSGELEGTE(S) ABDECKUNG UND ZUBEHÖR
STACKABLE COOKING UTENSILS AND ADAPTED COVER AND ACCESSORY

(30) Priorité: 18.03.2005 FR 0502734
(43) Date de publication de la demande: 16.01.2008
(73) Titulaire: SEB SA, 69130 Ecully (FR)
(72) Inventeur: CUILLERY, Pascal, 74210 Faverges (FR); PLICHON, Stéphane, 74000 Annecy (FR); MAGNOULOUX, Guy, 74370 Pringy (FR); BRASSET, Jean-François, 74000 Annecy (FR)
(74) Mandataire: Pichat, Thierry
(86) Numéro de dépôt international: PCT/FR2006/000574
(87) Numéro de publication internationale: WO 2006/100367

(56) Documents cités:
- GB-A- 835 681
- US-A- 4 478 349
- US-A- 5 307 951
- US-A- 5 924 592
- US-A- 5 957 038

## Description

L'invention concerne un article culinaire de cuisson, seul, ou dans un ensemble, un couvercle ou encore un ustensile tel qu'une cuillère.

Dans une application spécifique préférée, l'invention concerne un set de poêles ou de casseroles/faitouts qui, grossièrement, s'empile sensiblement horizontalement en emboîtant les poignées.

US-A-5 957 038 ou US-A-4 478 349 divulgue un article culinaire de cuisson empilable sur un autre article culinaire, le premier comme le second comprenant au moins une poignée pour une préhension à main nue et une calotte pour y recevoir des aliments.

Le document US-A-5924592 décrit un accessoire pour un article culinaire et le document GB-A-835681 divulgue un couvercle pour un article culinaire.

Outre le fait que la calotte de l'article supérieur n'apparaît pas nécessairement adaptée pour être posée à plat sur une surface de chauffage de cuisinière ou plaque de cuisson pour y être chauffée par-dessous, se pose ici un problème d'empilement, lorsqu'on souhaite éviter un appui entre articles par toute la périphérie de leurs calottes.

Pour un set d'articles on vise préférentiellement que l'empilement de deux articles de diamètres non consécutifs reste possible, cette configuration correspondant au cas où un article de milieu de pile est empilé sur un article de bas de pile, par exemple.

On souhaite également, si possible, pouvoir non seulement stabiliser sensiblement horizontalement la pile d'articles, mais également verticalement, de manière à éviter que l'article supérieur tourne.

On vise aussi de préférence à stabiliser l'inclinaison latérale des articles les uns par rapport aux autres.

Dans le cadre du couvercle précité, on vise par ailleurs avantageusement à pouvoir adapter l'importance du recouvrement, par le couvercle, de l'article culinaire concerné. Un contrôle ou une régulation de l'échappement vapeur est ainsi avantageusement recherché, en particulier dans une application casseroles et faitouts.

On notera qu'on entend par article culinaire « de cuisson », un article prévu particulièrement pour passer au feu ou sur une surface de chauffage par dessous, hors four, en particulier sur une cuisinière ou une plaque de cuisson.

Selon une première caractéristique de l'invention, la calotte de l'article prévu pour être empilé sur l'autre, inférieur, est adaptée pour être posée sur cette surface de chauffage « par-dessous » et ledit article comprend en outre au moins un pion de retenue en pile, localisé sur la poignée, et au moins un logement coopérant, également localisé à cet endroit et défini, au moins en partie, par une zone en creux de ladite poignée, ceci pour le maintien en pile de cet article supérieur, le logement et le pion étant pour cela adaptés respectivement à recevoir un autre pion et à être reçu dans un autre logement, tous deux étant complémentaires à ceux précités et prévus sur ledit article inférieur.

On prévoit que, dans un état horizontal du fond plat de la/chaque calotte, les pion(s) et logement(s) soient chacun délimités par une surface périphérique latérale définie par des génératrices dressées vis-à-vis de la face supérieure ou inférieure de la poignée.

Pour tirer au mieux parti de la zone de liaison qui existe entre la poignée et la calotte de l'article, on propose par ailleurs qu'une partie des limites du logement considéré soit définie par la face extérieure de la calotte et/ou par le rebord que celle-ci présente à l'extrémité supérieure d'ouverture de sa paroi.

Différentes formes de pion et de logement, en particulier à paroi latérale ayant des génératrices parallèles ou convergentes en direction du sommet du pion considéré, sont envisagées.

Dans les revendications jointes, dont les caractéristiques originales et performantes sont ici prises en compte, il est notamment traité, dans une pile, des questions d'équilibre, stabilité, de blocage possible en rotation, de position du centre de gravité par rapport à la surface de sustentation, d'un possible basculement de coincement déverrouillable. Pour tout détail utile, on se réfèrera à ces revendications.

En particulier pour un contrôle en rotation favorable évitant un débattement exagéré autour d'un axe vertical, ou sensiblement vertical, il est envisagé que les articles comprennent une ou plusieurs excroissances où des joues latérales de centrage décalée(s) latéralement par rapport au pion précité de retenue en pile et/ou des godrons en saillie sur la surface latérale extérieure du pion, avec des formes en creux complémentaires sur le logement, avec a priori des surfaces coopérantes qui ne seront pas de révolution.

Les joues pourront en particulier être réalisées à l'endroit d'(au moins) un second couple de pion et logement complémentaires entre eux mais différents des premiers pion(s) et logement(s) complémentaire(s) précités de retenue en pile.

Plus précisément on prévoit qu'au moins deux articles empilés successifs de la pile pourront comprendre chacun plusieurs dits pions et logements incluant, parmi eux :
- un premier couple de pion et logement complémentaires entre eux, engagés l'un dans l'autre et venant alors en contact latéralement au moins à l'endroit des zone de surfaces opposées, ou sensiblement opposées, suivant l'axe de la poignée considérée, pour une retenue anti-basculement de article supérieur par rapport à l'article inférieur, au-delà d'un angle déterminé,
- et un second couple de pion et logement complémentaires entre eux, également engagés l'un dans l'autre et présentant alors des zones de surfaces de côté se faisant face et n'ayant pas une forme de révolution, pour une retenue anti-rotation, au-delà d'un angle déterminé, de article supérieur par rapport à l'article inférieur, suivant l'axe d'empilement.

Selon un autre caractéristique, le pion, ou l'un au moins des pions pourra être périphériquement dissymétrique sur sa paroi latérale, suivant les génératrices concourants qu'il présentera alors en direction de son sommet. En particulier, ce(s) pion(s) présentera avantageusement, côté arrière opposé à la calotte, un angle au sommet plus proche de la verticale qu'il ne le sera à l'avant, côté calotte. Ceci est favorable à un bon empilement stable.

Un cran sur le couvercle pourra par ailleurs servir à bloquer dans une orientation relative déterminée le couvercle par rapport à la calotte à recouvrir.

Sans cran, la combinaison pion/logement favorisera de toute façon le rangement en pile de toutes ces pièces, une mise en place facilitée du couvercle sur l'article et une adaptation aisée de l'importance du recouvrement de cet article par le plateau du couvercle.

Des exemples non limitatifs de réalisation suivent en référence aux dessins annexés dans lesquels :
- la figure 1 montre une coupe diamétrale de deux casseroles empilées, suivant un plan vertical passant par l'axe d'allongement de leurs poignées,
- la figure 2 est une même coupe d'un détail d'empilement d'un pion dans un logement, avec une position légèrement inclinée du manche supérieur,
- la figure 3 est une autre réalisation, en coupe dans le même plan, de deux articles empilés pareillement,
- la figure 4 montre de dessus la réalisation de la figure 1, avec un couvercle partiellement recouvrant,
- la figure 5 est une perspective d'une autre réalisation montrant une préparation de mise en pile, la figure 6 montrant un détail de la figure 5, suivant la même coupe que la figure 1,
- les figures 7 et 9 montrent encore suivant la même coupe, deux autres réalisations,
- les figures 8 et 10 sont deux coupes locales respectivement suivant VIII-VIII et X-X,
- la figure 11 montre encore un autre mode de réalisation suivant la même coupe diamétrale,
- même situation sur la figure 12, et sur la figure 13 où l'article inférieur est ici un faitout,
- figures 14 et 15, on voit deux autres couvercles empilables entre eux, la fig.15 étant une vue de dessous.

Comme illustré, dans toutes les piles montrées, les poignées sont identiques entre elles (y compris donc leur fixation à la calotte), au moins pour un même type d'articles.

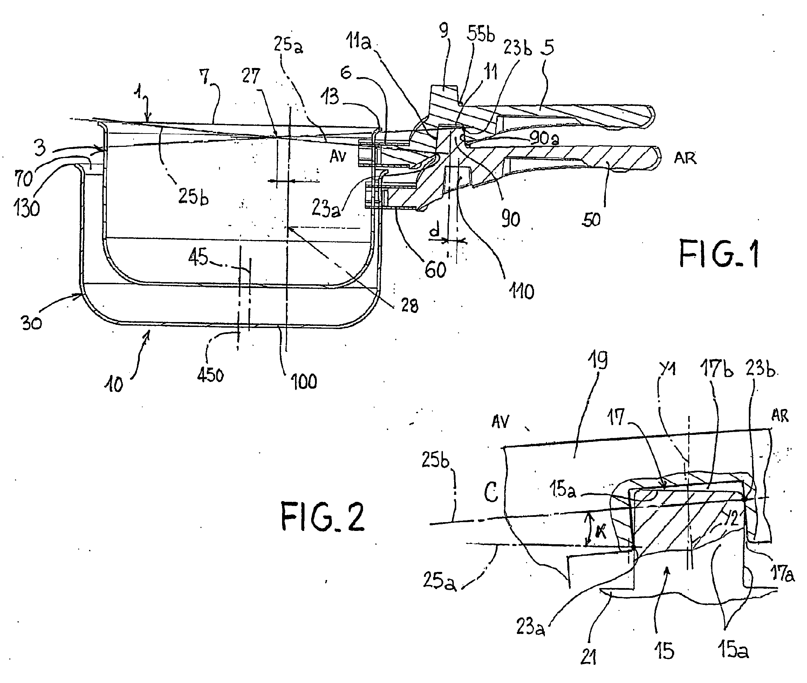

Figure 1, on voit deux casseroles de tailles non consécutives appartenant à un même lot de casseroles susceptibles de s'emboîter au moins partiellement par leur calotte.

Chaque article culinaire 1, 10 comprend une calotte respectivement 3, 30 et une poignée de manutention 5, 50.

Chaque poignée se présente ici comme un manche allongé fixé à une extrémité, par une embase 6, 60 pare-flamme, à la paroi latérale de la calotte, en partie haute, à proximité du rebord périphérique supérieur 13, 130 qui limite chaque calotte autour de son ouverture supérieure 7, 70.

Chaque poignée 5, 50, thermiquement isolée, permet une prise à main nue et à pleine main de l'article culinaire concerné.

Par ailleurs, chaque poignée 5, 50 comprend, conformément à l'invention, un pion 9, 90 et un logement coopérant 11, 110.

Dans la réalisation de la figure 1, les pions saillants 9, 90 et les logements correspondants 11, 110 sont intégralement formés à l'endroit de la poignée correspondante 5, 50.

Pour empiler de manière stable l'article 1 sur l'article 10 dont le diamètre de calotte est plus important, le pion 90 est disposé à l'intérieur du logement 11.

La pile est stable du fait de cet engagement, sans qu'il y est ici d'autres contacts entre les articles 1 et 10 que celui entre la surface latérale 90a du pion 90 et celle 11a qui l'entoure ici étroitement du logement. En particulier les calottes ne sont pas en contact entre elles.

Figure 1, en supposant le fond 100 de la calotte disposé horizontalement, les pions et logements de la pile formée se dressent tous suivant un axe vertical.

L'écart horizontal d entre les axes du pion 90 et du logement 110 correspondant est faible.

Chaque pion 9, 90 se dresse sur la partie supérieure de la poignée, les logements étant formés à l'opposé, en partie inférieur.

Les deux articles tiennent donc l'un dans l'autre en porte-à-faux, ici donc uniquement par engagement du pion 90 dans le logement 11. Cet engagement est ici conique, les pions et les logements étant chacun tronconiques.

Figure 2, le pion schématisé en 15 engagé dans le logement 17 de la poignée 19 de l'article supérieur concerné est à paroi(s) latérale(s) 15a ayant des génératrices parallèles, tel qu'un parallélépipède rectangle ou un cylindre, la forme du logement 17 étant de préférence complémentaire.

On remarque que l'axe Y1 du pion 15 est vertical, tandis que celui Y2 suivant lequel s'élève le logement 17 est légèrement incliné en direction ici de la gauche où la lettre C indique la présence, de ce côté, de la calotte de l'article culinaire à laquelle est donc raccordée la poignée 19, à l'image de la représentation de la fig.1.

Ainsi, la poignée 19 est légèrement inclinée par rapport à celle 21 de l'article inférieur pourvu du pion 15.

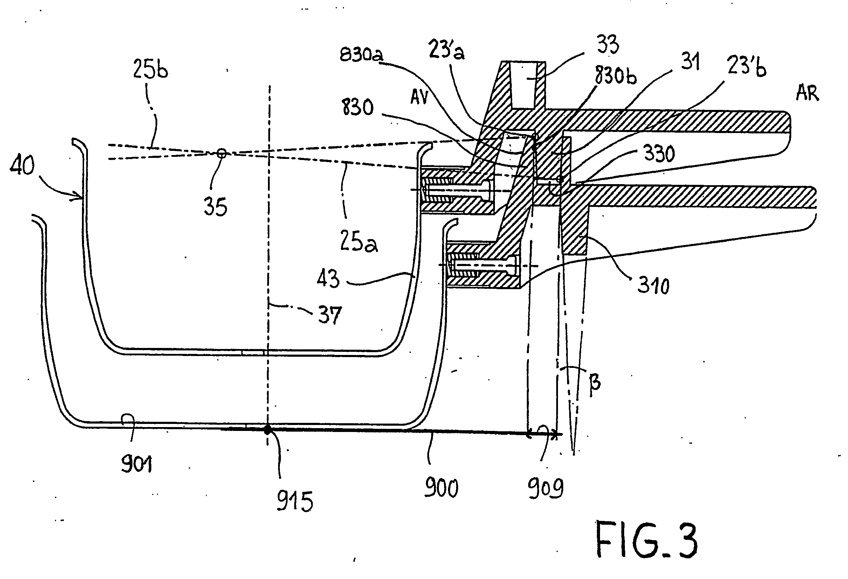

La situation pourrait au demeurant être inverse, à savoir que l'on aurait pu intervertir pion et logement, de sorte que le pion se dresserait sous la paroi inférieure de la poignée supérieure, tandis que le logement serait creusé dans la face supérieure de la poignée inférieure (voir pour illustration d'un tel exemple la figure 3), ceci pour indiquer que ce qui suit peut aussi bien s'appliquer en inversant pion et logement.

Figure 2 donc, au moins deux zones de contact 23a, 23b (voir mêmes repères sur la figure 1) sont définies, du fait de l'engagement du pion dans le logement.

Figure 2, la première zone de contact 23a est située vers la base du pion 15, à proximité de l'ouverture 17a du logement 17 (il s'agit de l'ouverture par laquelle le pion a été engagé dans le logement), et ce le long de la partie de périphérie du pion et de ce logement la plus proche de la calotte C où sont fixées les deux poignées 19, 21 (ou 5 et 50 sur la figure 1). L'autre zone de contact 23b (ici en haut et à l'arrière) est donc située à l'opposé, vers le fond 17b du logement 17, et donc vers le sommet 15a du pion 15.

Les deux surfaces de contact 23a,23b sont opposées l'une à l'autre suivant l'axe, tel que 25b, de la poignée considérée, radialement donc à la calotte ; idem pour les zones 23'a,23'b sur les autres figures.

En considérant donc l'avant (AV) du côté de la calotte C et l'arrière (AR) à l'opposé, la première zone de contact périphérique 23a est située à l'avant en bas du logement et du pion, tandis que l'autre zone opposée 23b de contact est située à l'arrière, en haut.

Figure 1, on aura remarqué que l'engagement du pion dans le logement définit des surfaces de contact beaucoup plus étendues, sans permettre même un léger basculement de l'article supérieur par rapport à l'article inférieur, ce qui s'est donc produit dans l'hypothèse de la figure 2 (angle α entre 3° et 15° de préférence).

Figure 2, on remarquera encore que deux plans 25a, 25b respectivement perpendiculaires à la première zone de contact 23a et à la seconde zone de contact opposé 23b, de périphérie du pion et du logement, sont concourants en direction de la calotte C.

On a figuré avec les mêmes repères les deux plans correspondants sur la figure 1, où l'on note que la ligne inférieure figurant le plan 25a est inclinée par rapport à l'horizontale puisque les génératrices des logement et pion sont, dans cette version, concourantes.

Figure 1, les deux plans figurés par lesdites lignes 25a, 25b se croisent en 27 à l'intérieur de la calotte 1, au-delà du plan vertical figuré en 28 et qui contient le centre de gravité de l'article supérieur 1. Comme le montrent les figures 1 et 2, cette situation est réalisée qu'il y ait donc ou non jeu entre pion et logement et que les génératrices soient parallèles ou non.

Au vu de la figure 3 où l'on retrouve figurés avec les mêmes repères (25a, 25b) les deux plans concourants, on comprend également que ceci s'applique à un pion 31 saillant en face inférieure d'une poignée et engagé dans un logement 33 ménagé en face supérieure de l'autre poignée, le croisement des deux plans en 35 étant bien situé au-delà du plan vertical 37 contenant le centre de gravité de l'article supérieur 40 de la pile.

Sur cette figure 3, on a à nouveau fait figurer les deux zones de contact, ici repérées 23'a, 23'b, entre le pion 31 de retenue anti-basculement et le logement 33 coopérant. La première zone est située vers la base du pion, du côté le plus proche de la calotte 43, l'autre à l'opposé, vers le fond du logement 33 et le sommet du pion 31.

Figure 3, l'angle β au sommet des génératrices concourantes du pion dressé 310, identique au pion 31, et complémentaire des logements 33, 330 est tel que β = 6.5°.

Les formes des pion(s) et logement(s) seront de préférence choisies parmi un tronc de cône, un tronc de pyramide, parallélépipède, cylindre et ovale.

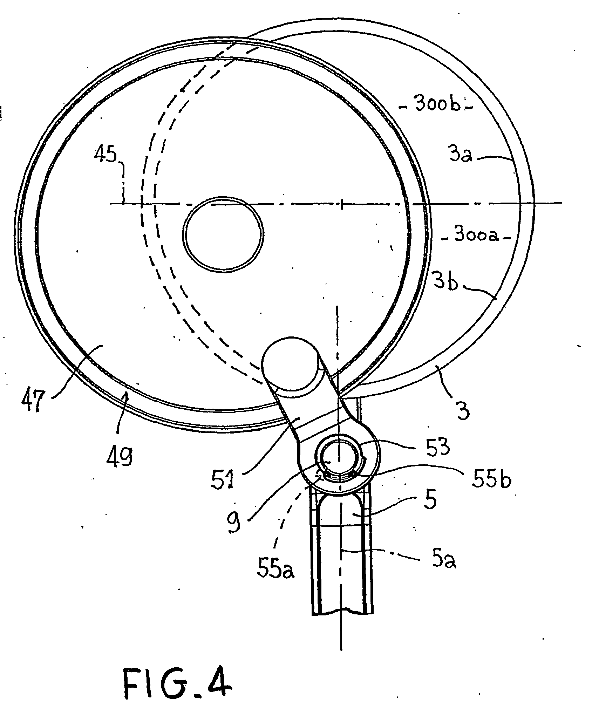

Si l'on s'intéresse maintenant aux figures 1 et 4, on remarquera d'abord, figure 4, que la calotte supérieure est définie par deux demi-surfaces courbes 3a, 3b, sensiblement identiques, réunies à l'endroit du plan médian 45 perpendiculaire à la direction 5a d'allongement de la poignée 5 suivant laquelle cette poignée se raccorde à la calotte 3.

Le plan médian 45 sépare le volume intérieur de la calotte en deux demi-volumes, sensiblement identiques, 300a, 300b.

Dans cette situation empilée, figure 1, on remarque en outre que ce plan médian 45 se situe entre le même plan médian vertical 450 et la poignée 50 de l'article inférieur, ce qui décale latéralement, mais toujours sensiblement horizontalement ou avec un faible angle d'inclinaison, la calotte supérieure à l'intérieur de la calotte inférieure 30.

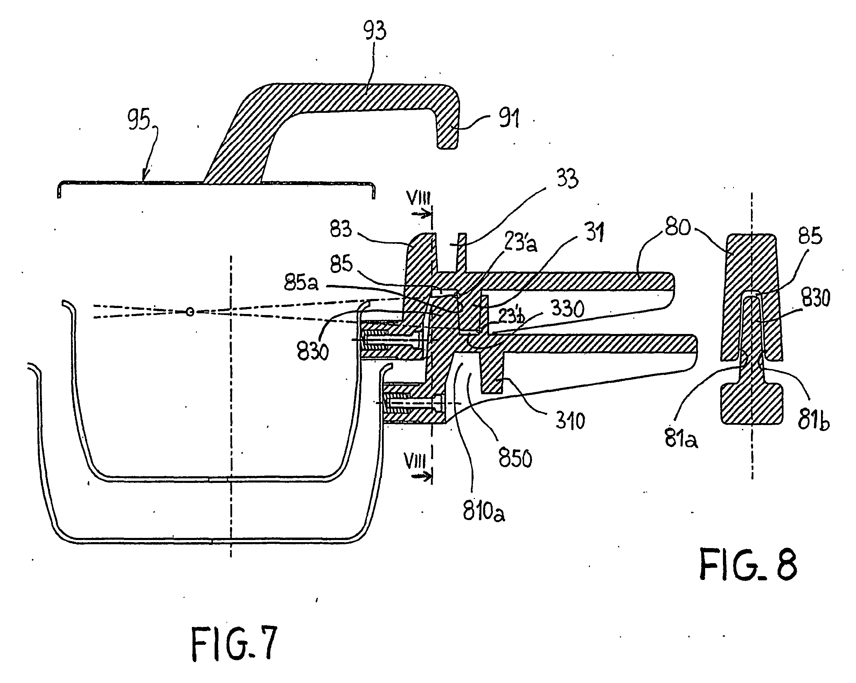

Ainsi, dans cet état empilé, le plan médian de l'article supérieur reposant sur l'article inférieur, avec sa calotte logée dans celle de l'article inférieur, est donc plus près de la poignée de l'article inférieur que le plan médian de cet article inférieur. Figures 3 et 7, on peut constater également un tel décalage.

Figure 4, la calotte 3 est en outre partiellement recouverte par le plateau 47 d'un couvercle 49 manoeuvrable par un manche, ou une poignée, 51 faisant saillie radialement au plateau 47, sensiblement parallèlement au plan dans lequel celui-ci s'étend, globalement.

Le manche 51 est court et large. L'un ou l'autre entre ce manche et celui de l'article à recouvrir comprend un pion, l'autre comprend une ouverture. Les deux sont avantageusement pourvus d'un cran pour bloquer en rotation le couvercle, de préférence en position de recouvrement total de la calotte.

Figure 4, le couvercle présente une ouverture circulaire traversante 53 d'axe perpendiculaire au plan du plateau 47 et adaptée pour recevoir un pion tel que 9 ou 90, lorsque celui-ci est dressé sur la face supérieure de la poignée. Si le pion devait être réalisé sur la poignée 51, il serait en saillie sous cette poignée.

Les crans complémentaires 55a, 55b de l'ouverture et du pion sont formés par un secteur angulaire respectivement en saillie à la base du pion (figures 1 et 4) et en creux sur la paroi latérale de l'ouverture 53 (figure 4).

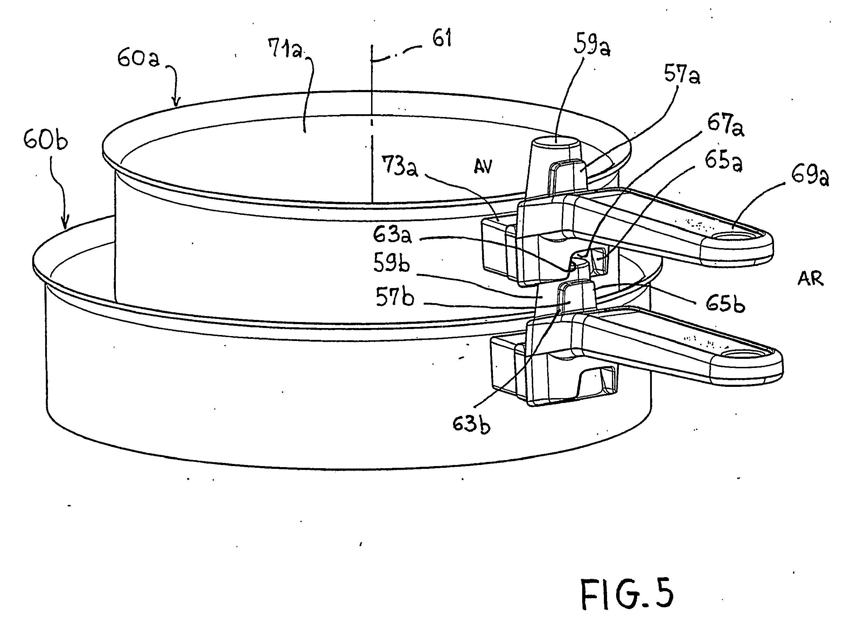

L'excroissance arrière 57a,57b formée en saillie sur la surface latérale du pion respectivement 59a et 59b sur la figure 5 peut également servir à bloquer en rotation, dans une position, le couvercle dont l'ouverture du manche présenterait une forme complémentaire et serait placée autour du pion.

Sur cette même figure 5, les excroissances latérales 57a, 57b ont toutefois pour autre but, voire pour but principal, d'assurer un blocage en rotation entre les deux articles culinaires 60a, 60b illustrés, ceci autour de l'axe 61 dressé d'empilement.

Pour cela, les faces latérales planes 63b, 65b de l'excroissance 57b viennent au contact, ou sont proches, des côtés planes(ou faces latérales) 63a, 65a du logement 67a creusés sous la poignée 69a de l'article culinaire supérieure (dont la calotte 71a est bien entendu de plus petit diamètre que celle de l'article inférieur 60b).

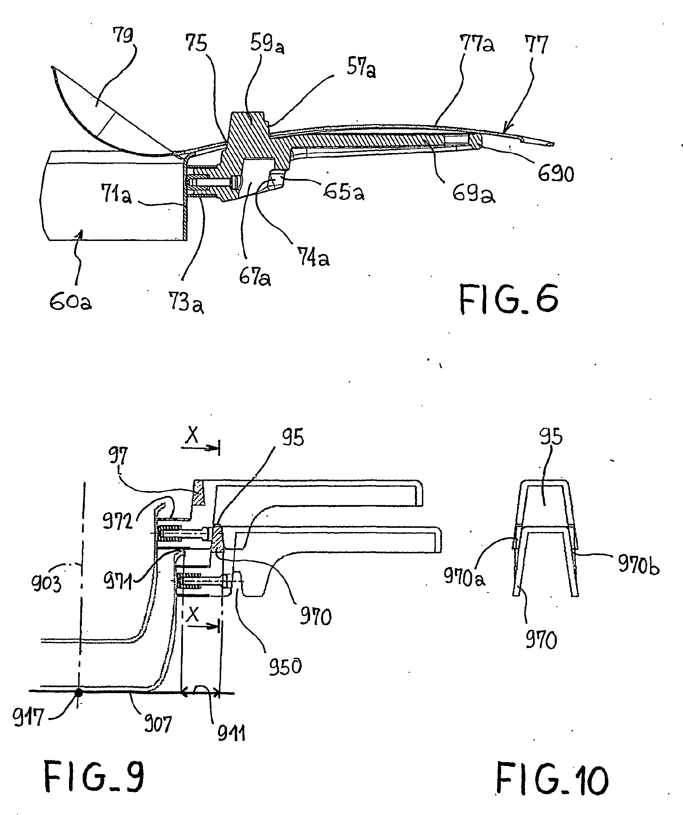

Figure 6, on remarquera que dans cette situation, le pion, tel que 59a qui se dresse au-dessus de la poignée, est situé en limite avant de la poignée, à proximité immédiate de l'embase pare-flamme 73a. Sur la même figure, on remarquera encore les deux formes extérieurement arrondies du pion supérieur 59a et du logement correspondant inférieur 67a, ces formes permettant ici une libre rotation entre les articles ou d'un article vis-à-vis du couvercle, l'anti-rotation étant assurée en assurant toutefois la retenue anti-basculement, par l'excroissance correspondante 57a, tout cela au moins en position de plein engagement de chaque pion dans son logement. L'excroissance 57a s'interrompt avant le sommet du pion 59a.

Concernant le logement inférieur 67a, il est donc ouvert sur le côté, ici vers l'arrière, en 74a. Cette ouverture est décalée latéralement par rapport à l'axe suivant lequel se dresse le logement et c'est donc sur les côtés ici sensiblement plans, tels que 65a, de cette ouverture décalée que s'opère le blocage en rotation des deux articles.

Figure 6, le pion 59a sert à sa base, donc avec son excroissance 57a, de repose-spatule (terme générique) en recevant là l'orifice 75 prévue sur le manche 77a d'une cuillère 77 qui peut par ailleurs reposer, sensiblement horizontalement, sur le rebord supérieur de la calotte 71a (vers la base du manche proche de sa partie creuse en forme de bol 79) et sur l'arrière du manche 69a (extrémité 690). D'autres accessoires sont visés tels que pince, louche, cuillère...

Figures 7 et 8, on retrouve quasiment la solution de la figure 3 dans laquelle le pion et le logement complémentaire, tels que 31 et 33, état des éléments de révolution, le blocage en rotation entre les articles est assuré par un pion et un logement additionnels 83, 85 pour ce qui concerne la poignée 80 de l'article supérieur (ou encore 830, 850 pour celle de l'article inférieur).

Dans cette solution, on note ainsi la présence de joues latérales repérées 81a, 81b sur la figure 8 (voir également 810a, figure 7) retenant en rotation le second pion 830, par engagement de celui-ci dans le second logement, ou cavité, 85 de la poignée de l'article adjacent (ici un article supérieur); voir également cavité 850, figure 7.

Les parois 81a, 81b, 810a n'étant pas de révolution, les logement 85 et 850 de section non circulaire, comme d'ailleurs les seconds pions 83, 830, pour jouer leur rôle de blocage en rotation des casseroles.

Par contre, on notera que le blocage en inclinaison est ici uniquement assuré par la seule coopération du pion 31 avec le logement 330 (voir les zones privilégiées de contact 23'a, 23'b), le second pion 830 ne coopérant qu'avec la paroi dorsale 85a du seul logement 85, dès lors que celle-ci définit également la paroi frontale du pion 31 où est située sa zone privilégiée de contact avant 23a.

Ainsi, et pour résumer, on trouve dans cette version, et sur chaque poignée, un premier pion et un premier logement de révolution pour l'appui de l'article culinaire supérieur sur l'article culinaire inférieur, avec une retenue en basculement, mais sans blocage en rotation, ce dernier étant assuré par le second pion et second logement 83, 85 qui n'ont pas une forme de révolution et présentent donc des joues latérales de retenue anti-rotation.

Encore figure 7, on notera la forme terminale en pion tombant vers le bas 91 de la poignée 93 du couvercle 95. Le pion 91 est adapté pour s'engager dans le logement 33 de la face supérieure de la poignée qui partage donc sa paroi frontale avec la paroi dorsale du second pion 83.

Figures 9 et 10, on voit schématisée une solution dans laquelle on a associé à l'endroit d'un seul logement, tel que 95, et d'un seul pion, tel que 970, les fonctions d'appui/retenue en basculement (par une forme générale de révolution de chacun de ces deux éléments), avec toutefois des godrons latéraux 970a, 970b qui forment des excroissances latérales sur le pion 970 et des dégagements latéraux en creux dans le logement 95 pour rompre latéralement la forme en révolution et assurer le blocage latéral, ceci tout en favorisant les zones favorables d'appui frontale et dorsale telles que déjà présentées par exemple sur la figure 3 en 23'a et 23'b.

Figure 9, pour la clarté, on a repéré en outre 97 et 950 respectivement le pion dressé du manche de l'article supérieur et le logement du manche de l'article inférieur (complémentaire du pion). En 971, il y a appui de l'embase 972 de la poignée supérieure sur le bord supérieur de la calotte inférieure.

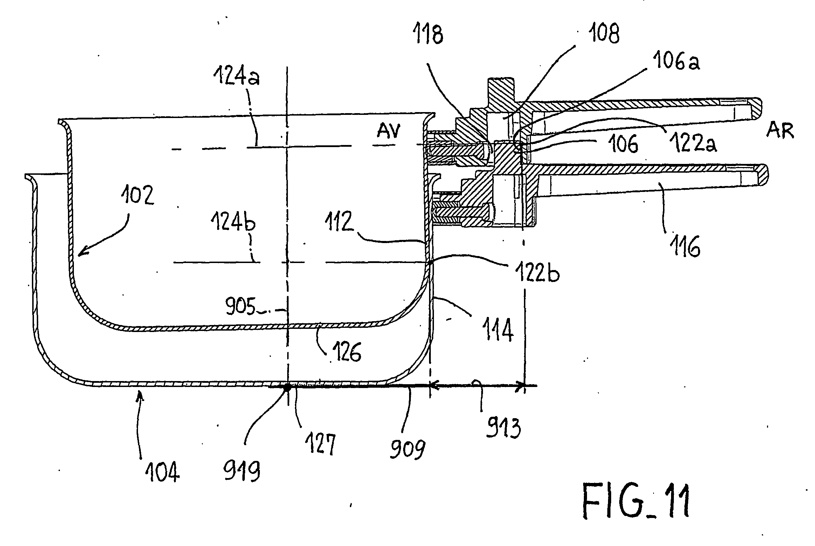

Figure 11, on voit une version dans laquelle l'appui stable de l'article supérieur 102 sur l'article inférieur 104 s'obtient non seulement par la coopération du pion dressé 106 avec le logement coopérant 108 de l'article supérieur, mais également par appui d'une partie de la surface latérale de la calotte 112 de l'article supérieur contre une partie de la face intérieure de la paroi latérale de la calotte 114 de l'article inférieur 104.

Dans ce cas; le pion 106 dressé en face supérieure du manche 116 pénètre dans le logement coopérant 108, avec jeu au moins à l'avant (zone frontale 118). L'article supérieur 102 est légèrement basculé par rapport à l'horizontale, vers l'avant et par rapport à l'article inférieur. Ce basculement est limité par appui, à l'arrière, du pion 106 (zone 106a) contre la partie proche de l'ouverture de la paroi dorsale 108a de la cavité 108, ainsi que par lé contact précité entre les calottes 112 et 114.

On a figuré en 122a et 122b les deux zones favorables d'appui, respectivement à l'endroit des contacts logement/pion et calotte/calotte par lesquelles passent les plans 124a, 124b perpendiculaires aux surfaces de contact où sont situées ces zones 122a, 122b et qui se croisent au-delà du centre de gravité de l'articule supérieur ainsi empilé (le point de croisement n'a ici pas été repéré, dès lors qu'il est situé à l'extérieur des deux calottes, au-delà d'elles, à l'opposé des zones de fixation des poignées).

Figure 11, il s'agit donc d'une solution :
- dans laquelle l'empilement stable est assuré par une coopération pion/logement sur la poignée,
- via un appui en porte-à-faux entre ce pion et ce logement,
- avec appui complémentaire assuré par contact latéral, à l'écart de leur fond (126,27), entre les calottes des articles empilés,
- et avec jeu dans l'engagement du pion dans le logement, en particulier en partie frontale du pion la plus proche de la calotte correspondante, permettant ainsi un léger basculement et donc le croisement entre les deux plans 124a, 124b précités.

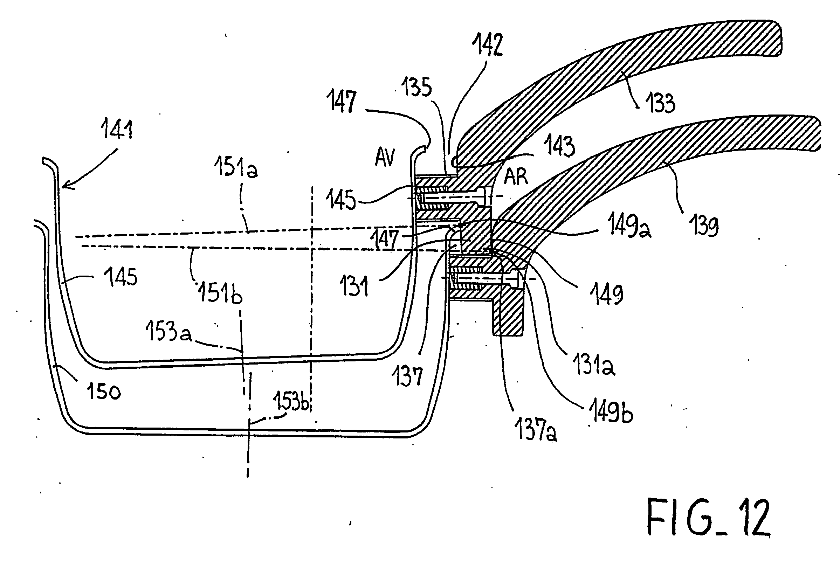

Figure 12, le pion 131 dressé sensiblement verticalement en partie inférieure de la poignée 133, près de son extrémité avant de contact avec l'embase 135, s'engage dans un logement 137 ménagé en partie supérieure de la poignée 139 de l'article inférieur.

Plus précisément, chaque logement est ici défini en partie par une paroi de la poignée et en partie par une zone de la calotte du même article.

Ainsi, pour l'article supérieur 141 par exemple, le logement 142 est-il limité, en partie dorsale, par une paroi frontale 143 dressée en partie avant de la poignée 133, tandis qu'en partie frontale (avant), ce logement est limité par la partie supérieure de la paroi latérale de la calotte 145 terminée par le rebord extérieur 147.

A l'endroit du pion de retenue 131, on remarque d'ailleurs qu'autant la retenue arrière est réalisée dans l'environnement de la zone de contact arrière 149b entre une partie de la surface latérale arrière du pion proche de son sommet 131a qui vient donc au contact d'une partie arrière basse 137a située près du.fond, à l'arrière, du logement 137, autant l'appui avant dans la zone 149a proche de la base du pion 131 et située à l'avant de celui-ci, s'effectue par contact avec l'extrémité du rebord 147.

On comprend qu'en l'absence de rebord ou dans une variante de réalisation, l'appui avant 149a pourrait s'effectuer plus bas au contact de la paroi de la calotte concernée.

Une fois encore, on remarquera que, compte tenu de l'engagement avec jeu du pion 131 dans le logement 137, il y a eu un léger basculement vers l'avant (côté calotte) de l'article supérieur, ce qui a ici généré le caractère concourant des deux plans 151a, 151b perpendiculaires aux surfaces de contact respectivement avant 149a et arrière 149b précitées, ces deux plans s'intersectant ici à l'avant des calottes, à l'opposé des manches, voire au-delà de ces calottes, donc au-delà du plan vertical contenant les centres respectifs de gravité des calottes, voire des deux articles culinaires complets illustrés.

Figure 12, on remarquera encore que les plans médians, respectivement en 153a et 153b, des deux calottes sont décalés latéralement, ce qui fait qu'ici, à l'opposé diamétral de la zone où chaque poignée 133, 139 est fixée à sa calotte, la paroi 145 se trouve rapprochée de la paroi 150 (voir à gauche sur la figure 12).

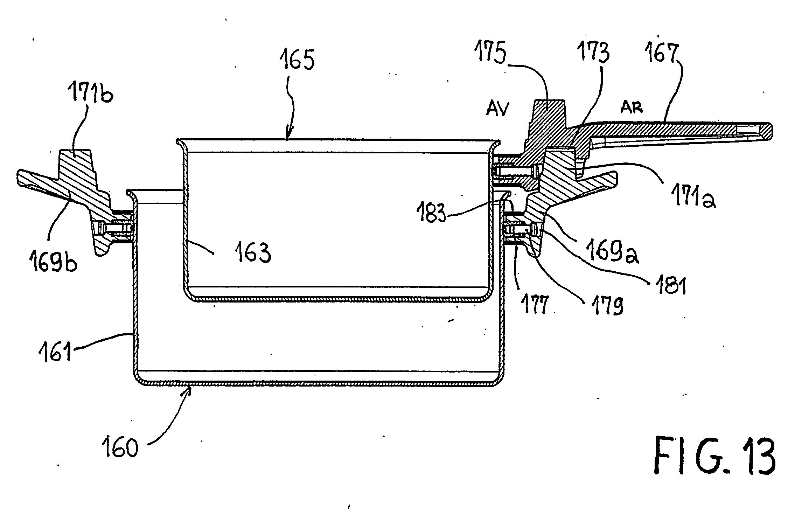

Figure 13, on voit la calotte 161 d'un faitout 160 recevoir la calotte (plus petite au moins en diamètre), 163 d'une casserole supérieure 165, avec appui de la poignée 167 de cette casserole sur l'une, 169a, des deux anses ou poignées de transport 169a, 169b du faitout, via l'engagement du pion 171a de l'anse 169a dans le logement coopérant 173 de la poignée 167.

Le pion 171a est dressé au-dessus de l'anse et son logement 173 est ménagé en partie inférieure, sous la poignée 167, vers l'avant de celle-ci proche donc de la calotte 163.

On remarquera également que sur l'anse opposée identique 169b, on retrouve le même pion (171b), le faitout 160 étant donc équipé de deux poignées ou anses diamétralement opposées avec chacune uniquement un pion supérieur pour la mise en pile avec un autre article culinaire, tel qu'en espèce une casserole ; mais ce pourrait être une poêle.

Sur le sommet de la poignée 167, on remarque également un pion 175 ici identique aux pions 171a, 171b.

Chaque pion ou plot ici figuré (voir également fig.6) est un cône dont l'axe n'est pas vertical, bien que proche de la verticale. Il est périphériquement dissymétrique sur sa paroi latérale. Ainsi, figs.6 et 13, l'angle du plot côté calotte est de 8° et l'angle opposé de 3°. Il y a donc côté arrière (AR) opposé à la calotte un angle au sommet plus proche de la verticale qu'il ne l'est à l'avant (AV), côté calotte. Ceci est favorable à un bon empilement stable.

On notera que les caractéristiques qui ont été décrites ci-avant sur telle ou telle variante sont interchangeables entre elles et peuvent être combinées.

On notera aussi que les poignées, telles que 169a, 5, 69a...,sont de préférence des poignées rapportées, fixées à la face extérieure de la paroi latérale (163, fig.13) de la calotte par l'intermédiaire d'un goujon (177, même figure) soudé sensiblement horizontalement à cette paroi et recevant une vis 179 introduite par un orifice 181 de la poignée de sorte que cette dernière s'appuie frontalement contre l'embase pare-flamme 183 ainsi coincée entre la paroi 163 et la partie frontale de la poignée. Une poignée rapportée facilite a priori la fabrication et les conditions d'application des solutions ici proposées.

On notera encore que l'on peut vérifier ce qui suit dans toutes les versions illustrées : Par exemple fig.3, Le plan vertical 37 contient le centre de gravité de l'article supérieur 102 maintenu sur l'article inférieur 104 par l'engagement du pion dans le logement. La ligne horizontale 900 définit une surface de projection et passe par le fond plat 901 et sa surface d'appui qui est donc la surface horizontale sur laquelle porte l'empilage ; voir également figs.9 et 11, repères respectivement 903,905 (plan vertical), 907,909 (surface de projection passant par le fond plat).

Les trois lignes verticales en traits alternés définissent dans chaque exemple des lignes d'une projection verticale. La première projection sur ladite ligne horizontale de 37,903 ou 905 concerne le centre de gravité de l'article supérieur. Les deux autres projections concernent toute la surface (ou polygone) de sustentation entre les articles (zone comprise entre les différents points de contact entre les deux ustensiles, points de contact compris) : il s'agit de la zone projetée repérée respectivement 909,911,913.

On constate que la projection orthogonale du centre de gravité (point noir 915,917,919 sur lesdites figs.3,9,11) est située à l'écart de (et donc n'appartient pas à) cette surface projetée, laquelle est bien sûr localisée à l'aplomb de la surface de contact plot/logement, à la différence de US-A-5 957 038 ou US-A-4 478 349 où la même projetée du centre de gravité est située à l'intérieur de la surface projetée de sustentation respectivement discoïdale et rectangulaire délimitée chaque fois par le contact non-localisé (établi sur toute la périphérie des calottes) entre les articles superposés.

On notera que, mathématiquement, ladite surface de contact plot/logement ou « polygone de sustentation » est l'enveloppe convexe de l'ensemble des points de contact. Dans un plan, cette enveloppe convexe peut être comparée à un élastique relâché qui englobe tous les points, et qui serait contracté.

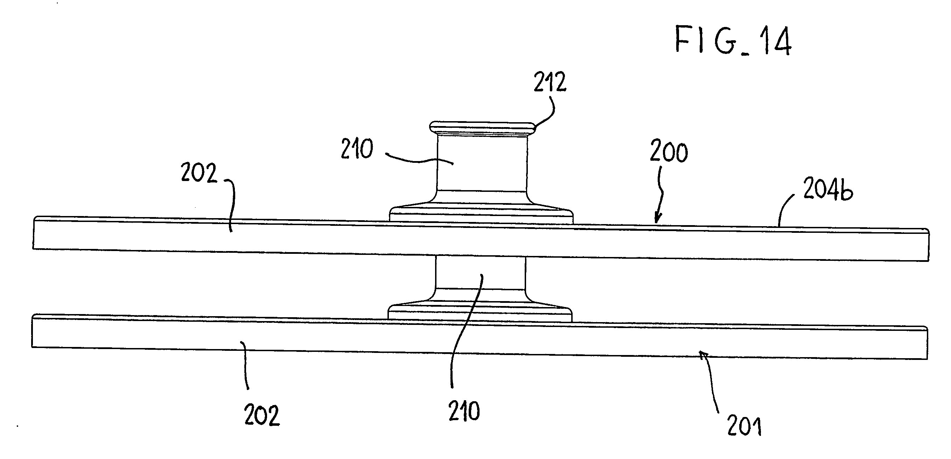

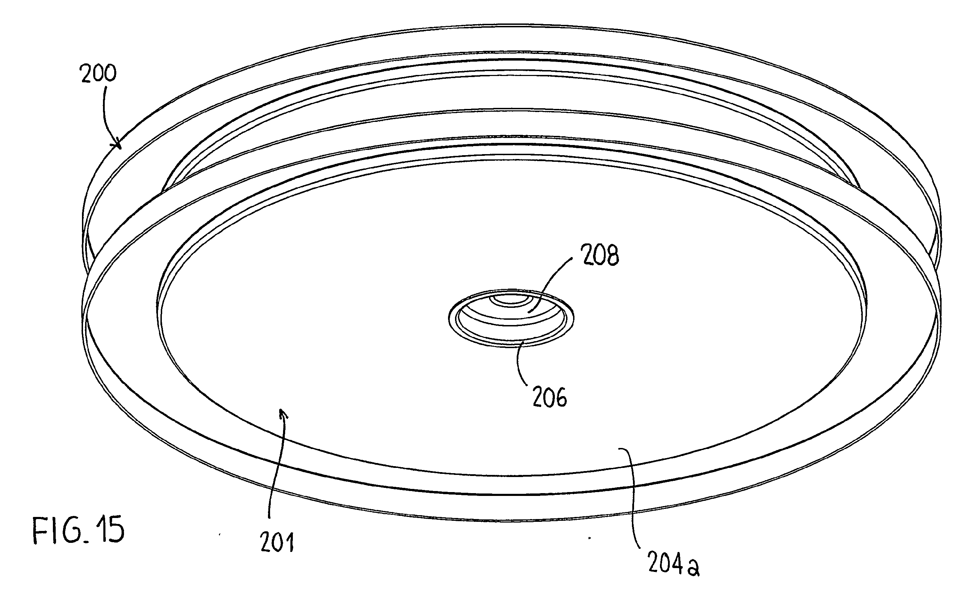

Figs.14 et 15, chaque couvercle 200,201 peut être utilisé pour couvrir une calotte d'un des articles culinaires précédents. chacun comprend un plateau 202 de recouvrement de cette calotte. Le plateau est pourvu, sur sa face intérieure 204a à diriger vers la calotte, d'un orifice 206 s'ouvrant sur un logement 208 ménagé à l'intérieur d'un pion 210, appelé aussi bouton, qui se dresse sur la face extérieure 204b opposée du plateau. Le logement d'un couvercle 200 et le pion d'un couvercle identique 201 sont adaptés pour que l'un s'engage dans l'autre.

Pour l'équilibre en pile, le pion se dresse verticalement et au centre du plateau. Il est globalement cylindrique, de section circulaire, comme le logement.

Vers, ici à, son extrémité de sommet, le pion présente une collerette 212 périphérique, ici circulaire, adaptée pour s'engager étroitement dans le logement de l'autre couvercle, pour bloquer de manière séparable et stabiliser horizontalement les couvercles ainsi empilés.

Plusieurs couvercles de dimensions (diamètre) de plateau différentes, mais ayant les mêmes pions/boutons, donc les mêmes logements, pourront être empilés en stabilité.

## Revendications

1. Article culinaire (1, 10) de cuisson, empilable, comprenant au moins une poignée (5, 50) pour une préhension à main nue et une calotte (3, 30) pour y recevoir des aliments, **caractérisé en ce que** cet article, qui est empilable sur un autre article culinaire, avec sa calotte adaptée pour être posée par son fond (100) sur une surface de chauffage d'une cuisinière ou plaque de cuisson pour y être chauffée par-dessous, comprend en outre au moins un pion de retenue en pile, localisé sur sa poignée (5, 50), et au moins un logement coopérant (11,110,33,330,85,850, 67a) également localisé à cet endroit et défini, au moins en partie, par une zone en creux de cette poignée (5, 50), ceci pour le maintien en pile de cet article superposé sur l'autre article, avec son fond vers le bas, le logement (11,110) et le pion (9,90, 59a,171a,175,830) étant pour cela adaptés respectivement à recevoir un autre pion (9, 90) et à être reçu dans un autre logement (11, 110), tous deux étant complémentaires à ceux précités et prévus sur ledit autre article.

2. Article selon la revendication 1, **caractérisé en ce que**, dans un état horizontal du fond (100) de la calotte, les pion(s) (9,90,59a,171a,175,830) et logement(s) (11,110,31,33,330,85,850,67a) sont chacun délimités par une surface périphérique latérale définie par des génératrices dressées vis-à-vis de la face supérieure ou inférieure de la poignée.

3. Article selon la revendication 1 ou 2, **caractérisé en ce que** la calotte (145,150) présente une face extérieure et un rebord, et une partie des limites du logement, ou de l'un au moins des logements (142,137), est définie par ladite face extérieure de la calotte (145,150) et/ou par le rebord (147).

4. Article culinaire (1, 10) selon l'une au moins des revendications précédentes, **caractérisé en ce qu'**au-dessus et en dessous de la poignée (5, 50), le pion (9,90) et le logement (11, 110), ou l'un au moins des uns et des autres :
- se dressent suivant l'un parmi un tronc de cône, tronc de pyramide, parallélépipède, cylindre de section circulaire ou ovale,
- et/ou présentent des formes et ont respectivement une section allant en s'évasant depuis une paroi de fond du logement (11, 110) vers son ouverture opposée et depuis une paroi d'extrémité libre du pion (9, 90) vers sa base de raccordement à la poignée (5, 50),
- et/ou se dressent en présentant, en section suivant un plan vertical, un angle au sommet non nul compris entre 2 et 20°.

5. Article selon l'une au moins des revendications précédentes, **caractérisé en ce qu'**il comprend des joues latérales ou faces latérales planes (81a,81b,810a) de centrage, décalées latéralement par rapport au pion (31,310) pour son placement et/ou son blocage en rotation dans le/l'un des logement/logements (33,330).

6. Article selon l'une au moins des revendications précédentes, **caractérisé en ce qu'**il comprend des godrons latéraux (970a, 970b) en saillie latéralement sur la surface latérale extérieure du pion (97,970) pour son blocage en rotation dans le logement (95,950), le logement présentant des formes en creux complémentaires.

7. Article selon l'une au moins des revendications précédentes, **caractérisé en ce que :**
- dans un état horizontal du fond (100) de la calotte, le pion (9, 90), ou l'un au moins des pions (59a,171a,175,830) est délimité par une surface périphérique latérale définie par des génératrices dressées vis-à-vis de la face supérieure ou inférieure de la poignée et qui sont concourantes en direction de son sommet, ledit pion étant périphériquement dissymétrique sur cette surface latérale,
- et/ou ledit pion (59a,171a,175,830) présente, côté arrière (AR) opposé à la calotte (43,163), un angle au sommet plus proche de la verticale qu'il ne l'est à l'avant (AV), côté calotte.

8. Ensemble de plusieurs articles culinaires (1, 10) empilés et chacun conformes à l'article selon l'une quelconque des revendications précédentes, avec chacun une dite calotte adaptée pour être disposée par son fond (100) sur une surface de chauffage par dessous, hors four, et pour s'engager dans ou recevoir elle-même une dite calotte d'un autre article culinaire, avec son fond vers le bas, l'empilement des articles étant conditionné par l'engagement localisé, l'un dans l'autre, d'un dit pion de retenue (9, 90) d'un dit article (1,10) de la pile et d'un dit logement (11, 110) coopérant d'un autre article.

9. Ensemble selon la revendication 8, **caractérisé en ce que** les poignées (5, 50, 69a, 80...) de certains au moins des articles dudit ensemble sont des manches identiques entre eux.

10. Ensemble selon la revendication 8 ou 9, **caractérisé en ce qu'**au moins deux articles empilés successifs de la pile comprennent chacun plusieurs dits pions (59a,171a,175,830) et logements incluant, parmi eux :
- un premier couple de pion (31, 310) et logement (33,330) complémentaires entre eux, engagés l'un dans l'autre et venant alors en contact latéralement au moins à l'endroit des zone de surfaces opposées, ou sensiblement opposées, suivant l'axe de la poignée (50, 50) considérée, pour une retenue anti-basculement de article supérieur (102) par rapport à l'article inférieur (104), au-delà d'un angle déterminé,
- et un second couple de pion (83,830) et logement (85, 850) complémentaires entre eux, également engagés l'un dans l'autre et présentant alors des zones de surfaces de côté (81a,81b) se faisant face et n'ayant pas une forme de révolution, pour une retenue anti-rotation, au-delà d'un angle déterminé, de article supérieur (80) par rapport à l'article inférieur, suivant l'axe d'empilement.

11. Ensemble selon l'une au moins des revendications 8 à 10, **caractérisé en ce que** dans la pile, l'article supérieur (102) tient empilé sur l'article inférieur (104), en porte-à-faux,
- soit uniquement par l'engagement du pion (9, 90), ou d'au moins un des pions (59a,171a,175,830), de l'un desdits articles dans le/un des logement/logements (11, 110) de l'autre,
- soit par l'engagement de ce pion (106) dans ledit logement (108) et par appui local, sur un rebord périphérique supérieur de la calotte, d'une embase pare-flamme (6,60,135,183) fixant la poignée, alors en forme de manche allongé, à la paroi latérale de ladite calotte (figure 9),
- soit par l'engagement du pion (106) dans le logement (108) et par appui local (122) de la paroi latérale de la calotte (112) de l'article supérieur (102) contre celle de l'article inférieur (104), à l'écart de leur fond (126,127), (figure 11).

12. Ensemble selon l'une quelconque des revendications 8 à 11, **caractérisé en ce qu'**une projection orthogonale (915,917,919) du centre de gravité d'un article supérieur sur un plan contenant le fond plat de l'article inférieur par lequel repose la pile des deux est située à l'écart de la projection orthogonale (909,911,913) sur ledit plan (900,907,909) de la surface de sustentation définie entre les deux articles.

13. Ensemble selon l'une quelconque des revendications 8 à 12, **caractérisé en ce que** l'article supérieur (102) tient empilé sur l'article inférieur (104), en porte-à-faux, avec au moins un dit pion (15,106) disposé de biais dans son logement (17,108) coopérant, un jeu transversal à la direction d'engagement et d'empilement existant pendant au moins une première partie de l'engagement du pion dans le logement.

14. Ensemble selon l'une au moins des revendications 8 à 13, **caractérisé en ce que** le pion (9, 90), ou l'un au moins des pions (59a,171a,175,830), d'un desdits articles de la pile est engagé dans un logement (11, 110) d'un autre, inférieur ou supérieur, en définissant au moins deux zones de contact (23a, 23b ;23'a,23'b) entre eux,
- l'une située vers la base du pion, à proximité de l'ouverture du logement, et ce le long d'une partie de la périphérie du pion (9, 90) et du logement la plus proche d'une partie en regard de la calotte (3, 30) où est fixée ladite poignée (5, 15) ou d'une zone (122b) de contact latéral entre les calottes (112,114),
- l'autre située à l'opposé, vers le fond (100) dudit logement et le sommet du pion.

15. Ensemble selon l'une au moins des revendications 8 à 14, **caractérisé en ce que** deux plans (25a,25b) respectivement perpendiculaires à une parmi deux/deux dites zones opposées de contact (23a, 23b ;23'a,23'b) entre pion (9, 90) et logement engagés l'un dans l'autre se croisent au-delà d'un plan vertical (37) contenant le centre de gravité de l'article supérieur (102) maintenu sur l'article inférieur (104) par l'engagement du pion dans le logement.

16. Couvercle (49) pour un article culinaire (1, 10, 102) selon l'une quelconque des revendications 1 à 7 ou pour un ensemble de plusieurs articles selon l'une quelconque des revendications 8 à 15, **caractérisé en ce qu'**il comprend un plateau (47) de recouvrement de la calotte (3, 30,112,114) de l'article à recouvrir et une poignée (51,93) pour une préhension à main nue débordant jusqu'au-delà de la périphérie du plateau (47) où la poignée (51,93) présente une ouverture (53) ou un pion pourvu/pourvue d'un cran (55a,55b) de blocage en rotation du couvercle par rapport à l'article, lorsque l'ouverture ou le pion du couvercle s'engage, en étant adapté pour cela, avec respectivement le pion ou le logement de l'article situé dessous.

17. Accessoire, tel qu'une cuillère, pour un article culinaire (60a) selon l'une quelconque des revendications 1 à 7 ou pour un ensemble de plusieurs articles selon l'une quelconque des revendications 8 à 15, **caractérisé en ce qu'**il comprend une poignée (77a) présentant une ouverture (75) adaptée pour être traversée par un pion (59a) d'un dit article culinaire, lorsque l'accessoire est posé sur la poignée (69a) dudit article.

18. Couvercle pouvant être utilisé pour un article culinaire selon l'une quelconque des revendications 1 à 7 ou pour un ensemble de plusieurs articles selon l'une quelconque des revendications 8 à 15, **caractérisé en ce qu'**il comprend un plateau (202) de recouvrement de la calotte de l'article à recouvrir, ce plateau étant pourvu, sur sa face intérieure à diriger vers la calotte, d'un orifice s'ouvrant sur un logement (208) ménagé à l'intérieur d'un pion (210) qui se dresse sur la face extérieure opposée du plateau, le logement d'un dit couvercle et le pion d'un couvercle identique étant adaptés pour que l'un s'engage dans l'autre.

19. Couvercle selon la revendication 18, **caractérisé en ce que** le pion (210) présente, vers ou à son extrémité de sommet, une collerette (212) qui s'engage étroitement dans le logement de l'autre couvercle pour bloquer de manière séparable et stabiliser horizontalement les couvercles (200,201) ainsi empilés.

## Claims

1. A stackable kitchen cooking utensil (1, 10) comprising at least one handle (5, 50) for grasping with one's bare hand and a pot (3, 30) for receiving food items therein, **characterised in that** this utensil, which is stackable on another cooking utensil and is designed to be placed by its bottom (100) on a heating surface of a stove or a cooking plate, in order to be heated thereon from below, further includes at least one stack-holding pin, located on its handle (5, 50), and at least one cooperating seating (11, 110, 33, 330, 85, 850, 67a) also located at this location and at least partially defined by a recessed area of this handle (5, 50), for holding this utensil superposed on the other utensil in a stack, with its bottom disposed downwards, the seating (11, 110) and the pin (9, 90, 59a, 171a, 175, 830) being therefore designed to receive another pin (9, 90) and to be received into another seating (11, 1100, respectively, both being complementary to the aforesaid ones and provided on said other utensil.

2. Utensil of claim 1, **characterised in that,** in a horizontal state of the bottom (100) of the pot, the pin(s) (9, 90, 59a, 171a, 175, 830) and seating(s) (11, 110, 31, 33, 330, 85, 850, 67a) are each delimited by a lateral peripheral surface defined by generating lines extending upwardly on the upper or lower face of the handle.

3. Utensil as claimed in claim 1 or 2, **characterised in that:**
the pot (145, 150) has an outside face and a rim,
and a portion of the boundaries of the seating, or of at least one of the seatings (142, 137), is defined by said outside face of the pot (145, 150) and/or by the rim (147).

4. Cooking utensil (1, 10) as claimed in at least one of the preceding claims, **characterised in that** above and beneath the handle (5, 50), the pin (9, 90) and the seating (11, 110), or at least one of either of them:
- is erected as one from amongst a cone frustum, a truncated pyramid, a parallelepiped, a cylinder or an oval,
- and/or have a shape and a cross section, respectively, flaring from a bottom wall of the seating (11, 110) towards its opposite opening and from a free end wall of the pin (9, 90) towards its connecting base with the handle (5, 50),
- and/or are made to have, as a section along a vertical plane, a non-zero angle at the top of between 2° and 20°.

5. Utensil as claimed in at least one of the preceding claims, **characterised in that** it includes lateral flanges or planar lateral faces (81a, 81b, 810a) for centring, which are offset laterally in relation to the pin (31, 310) for its placement and/or its blocking in rotation in the/one of the seating/seatings (33, 330).

6. Utensil as claimed in at least one of the preceding claims, **characterised in that** it includes lateral knurls (970a, 970b) protruding laterally from the outside lateral surface of the pin (97, 970) for its blocking in rotation inside the seating (95,950), the seating having complementary recessed shapes.

7. Utensil as claimed in at least one of the preceding claims, **characterised in that:**
- in a horizontal state of the bottom (100) of the pot, the pin (9, 90), or at least one of the pins (59a, 171a, 175, 830) is delimited by a lateral peripheral surface defined by generating lines drawn in relation to the upper or lower face of the handle and which are concurrent in the direction of its top, said pin being peripherally dissymmetrical on this lateral surface,
- and/or, on the rear side (AR) opposite the pot ((43, 163), said pin (59a, 171a, 175, 830) has an angle at the top which is closer to vertical than it is at the front (AV), on the pot side.

8. A set of several stacked cooking utensils (1, 10), each one consistent with the utensil as claimed in any of the preceding claims, each of said utensils comprising one said pot designed to be arranged by its bottom (100) on a surface for heating from below, outside of an oven, and for being inserted into, or itself receiving, said pot of another cooking utensil, with its bottom disposed downwards, the stacking of the utensils being determined by the localised insertion one inside the other of said holding pin (9, 90) of said utensil (1,10) of the stack, and of said seating (11, 110) of another utensil.

9. Set of claim 8, **characterised in that** the handles (5, 50, 69a, 80...) of at least some of the utensils of said set are hafts identical to one another.

10. Set as claimed in claim 8 or 9, **characterised in that** at least two successive stacked utensils of the stack each includes several of said pins (59a, 171a, 175, 830) and seatings, including amongst them:
- a first inter-complementary pin (31, 310), and seating (33, 330) pair inserted one into the other and thus coming into lateral contact at least at the location of the area of opposing or substantially opposing surfaces, along the axis of the so considered handle (50, 50), for an anti-tilting hold of the upper utensil (102) in relation to the lower utensil (104), beyond a specific angle,
- and a second inter-complementary pin (83, 830) and seating (85, 850) pair, likewise inserted one into the other and thus having facing side surface areas and not having a rotating shape, for an anti-rotation hold, beyond a specific angle, of the upper utensil (80) in relation to the lower utensil, along the stacking axis.

11. Set as claimed in at least one of claims 8 to 10, **characterised in that**, in the stack, the upper utensil (102) is held stacked on the lower utensil (104) in a cantilever-like fashion:
- either solely by the insertion of the pin (9, 90), or of at least one of the pins (59a, 171a, 175, 830), of one of said utensils into the/one of the seating/seatings (11, 110) of the other,
- or by the insertion of this pin (106) into said seating (108) and by local support on an upper peripheral rim of the pot, of a flame-resistant end fitting (6, 60, 135, 183) through which the handle, then in the shape of an elongated haft, is attached to the lateral wall of said pot (figure 9),
- or by the insertion of the pin (106) into the seating (108) and by local bearing (122) of the lateral wall of the pot (112) of the upper utensil (102) against that of the lower utensil (104), at a distance from their bottom (126, 127), (figure 11).

12. Set as claimed in any of claims 8 to 11, **characterised in that** an orthogonal projection (915, 917, 919) of the centre of gravity of an upper utensil on a plane containing the flat bottom of the lower utensil, by which the stack of two rests, is situated at a distance from the orthogonal projection (909, 911, 913) on said plane (900, 907, 909) of the supporting surface defined between the two utensils.

13. Set as claimed in any of claims 8 to 12, **characterised in that** the upper utensil (102) is held stacked on the lower utensil (104) in cantilever-like fashion, with at least one said pin (15, 106) arranged at an angle inside its cooperating seating (17, 108), a transverse play in the direction of insertion and stacking existing during at least one first portion of the insertion of the pin into the seating.

14. Set as claimed in at least one of claims 8 to 13, **characterised in that** the pin (9, 90), or at least one of the pins (59a, 171a, 175, 830), of one of said utensils of the stack is inserted into a seating (11, 110) of another lower or upper one, while defining at least two contact areas (23a, 23b; 23'a, 23'b) between them :
- one of said contact areas is situated near the base of the pin, in proximity to the opening in the seating, and along a portion of the periphery of the pin (9, 90) and of the seating closest to an opposite portion of the pot (3, 30) where said handle (5, 15) is attached, or of a lateral contact area (122b) between the pots (112, 114),
- and the other one is situated on the opposite side, near the bottom (100) of said seating and the top of the pin.

15. Set as claimed in at least one of claims 8 to 14, **characterised in that** two planes (25a, 25b), which are perpendicular, respectively, to one amongst two opposing contact areas (23a, 23b; 23'a, 23'b) between the pin (9, 90) and seating inserted one inside the other, intersect beyond a vertical plane (37) containing the centre of gravity of the upper utensil (102) held on the lower utensil (104) by the insertion of the pin into the seating.

16. A lid (49) for a cooking utensil (1, 10, 102) as claimed in any of claims 1 to 7 or for a set of several utensils as claimed in any of claims 8 to 15, **characterised in that** it includes a plate-like portion (47) for covering the pot (3, 30, 112, 114) of the utensil being covered and a handle (51, 930 for grasping with one's bare hand, extending beyond the periphery of the plate-like portion (47) where the handle (51, 93) has an opening (53) or a pin provided with a notch (55a, 55b) for blocking the lid in rotation in relation to the utensil, when the opening or the pin of the lid, being designed for this purpose, engages with the pin or the seating, respectively, of the utensil situated beneath.

17. An accessory, such as a spoon, for a cooking utensil (60a) as claimed in any of claims 1 to 7, or for a set of several utensils as claimed in any of claims 8 to 15, **characterised in that** it includes a handle (77a) having an opening (75) designed to be traversed by a pin (59a) of said cooking utensil, when the accessory is placed on the handle (69a) of said utensil.

18. A lid adapted to be used on a cooking utensil as claimed in any of claims 1 to 7, or on a set of several utensils as claimed in any of claims 8 to 15, **characterised in that** it includes a plate-like portion (202) for covering the pot of the utensil being covered, this plate-like portion being provided, on its inside face pointed towards the pot, with an orifice opening out onto a seating (208) made inside a pin (210), which is arranged on the opposing outside face of the plate-like portion, the seating of said lid and the pin of an identical lid being designed so that one is inserted into the other.

19. Lid of claim 18, **characterised in that**, near or at its top end, the pin (210) has a collar (212) which is tightly inserted into the seating of the other lid in order to separably lock and horizontally stabilise the lids (200, 201) thus stacked.

## Patentansprüche

1. Stapelbares Kochutensil (1, 10) mit zumindest einem Griff (5, 50) zum Ergreifen mit bloßer Hand und mit einer Kalotte (3, 30), um darin Nahrungsmittel aufzunehmen, **dadurch gekennzeichnet, dass** dieses Utensil, das auf ein weiteres Kochutensil stapelbar ist, mit seiner Kalotte dazu ausgelegt, mit seinem Boden (100) auf eine Heizfläche eines Herds oder einer Kochplatte gestellt zu werden, um davon von unten erhitzt zu werden, ferner zumindest einen Stapelungshaltezapfen aufweist, der an seinem Griff (5, 50) angeordnet ist, sowie zumindest eine zusammenwirkende Aufnahme (11, 110, 33, 330, 85, 850, 67a), die auch an dieser Stelle ausgebildet ist und zumindest teilweise von einem muldenartigen Bereich dieses Griffs (5, 50) gebildet wird, um den Halt der Stapelung dieses dem weiteren Utensil überlagerten Utensils mit seinem nach unten weisenden Boden zu gewährleisten, wobei die Aufnahme (11, 110) und der Zapfen (9, 90, 59a, 171a, 175, 830) zu diesem Zweck jeweils dazu ausgelegt sind, einen weiteren Zapfen (9, 90) aufzunehmen und in einer weiteren Aufnahme (11, 110) aufgenommen zu werden, wobei beide komplementär zu den genannten Teilen ausgebildet und auf dem weiteren Utensil vorgesehen sind.

2. Utensil nach Anspruch 1, **dadurch gekennzeichnet, dass** in einer horizontalen Lage des Bodens (100) der Kalotte die Zapfen (9, 90, 59a, 171a, 175, 830) und Aufnahme(n) (11, 110, 31, 33, 330, 85, 850, 67a) jeweils von einer umlaufenden Seitenfläche begrenzt werden, die von Mantellinien definiert wird, die gegenüber der oberen oder unteren Seite des Griffs stehen.

3. Utensil nach Anspruch 1 oder 2, **dadurch gekennzeichnet, dass** die Kalotte (145, 150) eine Außenseite und eine Umrandung aufweist und ein Teil der Begrenzungen der Aufnahme, oder zumindest einer der Aufnahmen (142, 137), von der Außenseite der Kalotte (145, 150) und/oder von der Umrandung (147) definiert wird.

4. Kochutensil (1, 10) nach zumindest einem der vorangehenden Ansprüche, **dadurch gekennzeichnet, dass** oberhalb und unterhalb des Griffs (5, 50), der Zapfen (9, 90) und die Aufnahme (11, 110), oder zumindest eines der einen und der anderen Teile
- in Form von einem Kegelstumpf, Pyramidenstumpf, Quader, Zylinder mit kreisförmigem oder ovalem Querschnitt stehen,
- und/oder Formen aufweisen und jeweils einen Querschnitt haben, die sich von einer Bodenwand der Aufnahme (11, 110) zu deren entgegengesetzten Öffnung und von einer freien Endwand des Zapfens (9, 90) zu seiner Anschlussbasis zum Anschluss an den Griff (5, 50) erweitern,
- und/oder so stehen, dass sie im Schnitt entlang einer senkrechten Ebene einen Scheitelwinkel ungleich null von 2 bis 20° aufweisen.

5. Utensil nach zumindest einem der vorangehenden Ansprüche, **dadurch gekennzeichnet, dass** es ebene Seitenwangen oder Seitenflächen (81a, 81b, 810a) zur Zentrierung enthält, die bezüglich des Zapfens (31, 310) zu dessen Positionierung und/oder Drehsicherung in der bzw einer der Aufnahme(n) (33, 330) seitlich versetzt sind.

6. Utensil nach zumindest einem der vorangehenden Ansprüche, **dadurch gekennzeichnet, dass** es Seitenstege (970a, 970b) enthält, die seitlich auf der äußeren Seitenfläche des Zapfens (97, 970) zu dessen Drehsicherung in der Aufnahme (95, 950) vorstehen, wobei die Aufnahme komplementäre Muldenformen aufweist.

7. Utensil nach zumindest einem der vorangehenden Ansprüche, **dadurch gekennzeichnet, dass**
- in einer horizontalen Lage des Bodens (100) der Kalotte der Zapfen (9, 90) oder zumindest einer der Zapfen (59a, 171a, 175, 830) von einer umlaufenden Seitenfläche begrenzt wird, die von Mantellinien definiert wird, die gegenüber der oberen oder unteren Seite des Griffs stehen und in Richtung seines Scheitels zusammenlaufen, wobei sich der Zapfen an dieser Seitenfläche unsymmetrisch umlaufend erstreckt,
- und/oder der Zapfen (59a, 171a, 175, 830) an der der Kalotte (43, 163) entgegengesetzten Rückseite (AR) einen Scheitelwinkel aufweist, welcher der Senkrechten näher ist als kalottenseitig an der Vorderseite (AV).

8. Einheit aus mehreren gestapelten Kochutensilien (1, 10), die jeweils dem Utensil nach einem der vorangehenden Ansprüche entsprechen, mit jeweils einer sogenannten Kalotte, die dazu ausgelegt ist, mit ihrem Boden (100) an eine ofenexterne Fläche zum Erhitzen von unten angeordnet zu werden und in eine Kalotte eines weiteren Kochutensils mit seinem nach unten gerichteten Boden einzugreifen oder selbst eine solche aufzunehmen, wobei die Stapelung von Utensilien durch bereichsweises gegenseitiges Einfügen eines Haltezapfens (9, 90) eines Utensils (1, 10) des Stapels und einer damit zusammenwirkenden Aufnahme (11, 110) eines weiteren Utensils konditioniert wird.

9. Einheit nach Anspruch 8, **dadurch gekennzeichnet, dass** die Griffe (5, 50, 69a, 80,...) zumindest bestimmter Utensilien der Einheit zueinander identische Stiele sind.

10. Einheit nach Anspruch 8 oder 9, **dadurch gekennzeichnet, dass** zumindest zwei aufeinanderfolgend gestapelte Utensilien des Stapels jeweils mehrere Zapfen (59a, 171a, 175, 830) und Aufnahmen aufweisen, darunter:
- ein erstes Paar von Zapfen (31, 310) und Aufnahme (33, 330), die komplementär zueinander ausgeführt sind, ineinander eingefügt sind und damit seitlich zumindest an der Stelle der gegenüberliegenden, oder im wesentlichen gegenüberliegenden, Flächenbereiche entlang der Achse des betreffenden Griffs (50, 50) in Kontakt gelangen, um einen verkippsicheren Halt des oberen Utensils (102) bezüglich des unteren Utensils (104) über einen bestimmten Winkel hinaus zu gewährleisten,
- und ein zweites Paar von Zapfen (83, 830) und Aufnahme (85, 850), die zueinander komplementär ausgeführt sind, auch ineinander eingefügt sind und dabei Seitenflächenbereiche (81a, 81b) aufweisen, die entgegengesetzt sind und keine umlaufende Form haben, um einen drehsicheren Halt des oberen Utensils (80) bezüglich des unteren Utensils entlang der Stapelungsachse über einen bestimmten Winkel hinaus zu gewährleisten.

11. Einheit nach zumindest einem der Ansprüche 8 bis 10, **dadurch gekennzeichnet, dass** in dem Stapel das obere Utensil (102) auskragend an dem unteren Utensil (104) gestapelt hält,
- entweder nur durch Eingreifen des Zapfens (9, 90) oder zumindest eines der Zapfen (59a, 171a, 175, 830) eines der Utensilien in der/einer der Aufnahme(n) (11, 110) des anderen Utensils,
- oder durch Eingreifen dieses Zapfens (106) in die Aufnahme (108) und durch bereichsweise Abstützung eines Flammenschutzschilds (6, 60, 135, 183) an eine obere Umfangsumrandung der Kalotte, das den dabei in Form eines länglichen Stiels vorliegenden Griff an der Seitenwand der Kalotte fixiert (Figur 9),
- oder durch Eingreifen dieses Zapfens (106) in die Aufnahme (108) und durch bereichsweise Abstützung (122) der Seitenwand der Kalotte (112) des oberen Utensils (102) an der des unteren Utensils (104), im Abstand zu ihrem Boden (126, 127), (Figur 11).

12. Einheit nach einem der Ansprüche 8 bis 11, **dadurch gekennzeichnet, dass** eine orthogonale Projektion (915, 917, 919) des Schwerpunkts eines oberen Utensils auf eine den flachen Boden des unteren Utensils enthaltende Ebene, über welche der Stapel dieser beiden aufliegt, auf Abstand von der orthogonalen Projektion (909, 911, 913) auf die Ebene (900, 907, 909) der zwischen den beiden Utensilien definierten Tragfläche liegt.

13. Einheit nach einem der Ansprüche 8 bis 12, **dadurch gekennzeichnet, dass** das obere Utensil (102) auskragend auf dem unteren Utensil (104) gestapelt hält, mit zumindest einem Zapfen (15, 106), der schräg in seiner damit zusammenwirkenden Aufnahme (17, 108) angeordnet ist, wobei ein quer zur Eingreif- und Stapelungsrichtung verlaufendes Spiel zumindest für einen ersten Teil des Eingriffs des Zapfens in die Aufnahme besteht.

14. Einheit nach einem der Ansprüche 8 bis 13, **dadurch gekennzeichnet, dass** der Zapfen (9, 90), oder zumindest einer der Zapfen (59a, 171a, 175, 830), eines der Utensilien des Stapels in eine Aufnahme (11, 110) eines weiteren, unteren oder oberen eingreift, indem zumindest zwei Kontaktbereiche (23a, 23b; 23'a, 23'b) zwischen diesen gebildet werden,
- von denen der eine bei der Zapfenbasis in der Nähe der Öffnung der Aufnahme liegt, und zwar entlang eines Umfangsabschnitts des Zapfens (9, 90) und der Aufnahme, der einem der Kalotte (3, 30) gegenüberliegenden Abschnitt am nächsten liegt, wo der Griff (5, 15) befestigt ist, oder eines seitlichen Kontaktbereichs (122b) zwischen den Kalotten (112, 114),
- der andere entgegengesetzt in Richtung zum Boden (100) der Aufnahme und zum Zapfenscheitel hin liegt.

15. Einheit nach zumindest einem der Ansprüche 8 bis 14, **dadurch gekennzeichnet, dass** zwei Ebenen (25a, 25b), die jeweils senkrecht zu einem der beiden/den beiden gegenüberliegenden Kontaktbereichen (23a, 23b; 23'a, 23'b) zwischen ineinander greifenden Zapfen (9, 90) und Aufnahme verlaufen, sich über eine vertikale Ebene (37) hinaus kreuzen, welche den Schwerpunkt des oberen Utensils (102) enthält, das durch Eingreifen des Zapfens in die Aufnahme auf dem unteren Utensil (104) gehalten wird.

16. Abdeckung (49) für ein Kochutensil (1, 10, 102) nach einem der Ansprüche 1 bis 7 oder für eine Einheit aus mehreren Utensilien nach einem der Ansprüche 8 bis 15, **dadurch gekennzeichnet, dass** sie eine Platte (47) zum Abdecken der Kalotte (3, 30, 112, 114) des abzudeckenden Utensils und einen Griff (51, 93) zum Ergreifen mit bloßer Hand enthält, der bis über den Umfang der Platte (47) hinausragt, wo der Griff (51, 93) eine Öffnung (53) oder einen Zapfen aufweist, die/der mit einem Rastelement (55a, 55b) zur Drehsicherung der Abdeckung bezüglich des Utensils versehen ist, wenn die Öffnung oder der Zapfen der Abdeckung, entsprechend ausgelegt, in Eingriff mit dem Zapfen oder der Aufnahme des darunter liegenden Utensils ist.

17. Zubehörteil, wie etwa ein Löffel, für ein Kochutensil (60a) nach einem der Ansprüche 1 bis 7 oder für eine Einheit von mehreren Utensilien nach einem der Ansprüche 8 bis 15, **dadurch gekennzeichnet, dass** es einen Griff (77a) mit einer Öffnung (75) aufweist, die dazu ausgelegt ist, von einem Zapfen (59a) eines Kochutensils durchsetzt zu werden, wenn das Zubehörteil auf den Griff (69a) des Utensils abgelegt ist.

18. Abdeckung zur Verwendung bei einem Kochutensil nach einem der Ansprüche 1 bis 7 oder bei einer Einheit von mehreren Utensilien nach einem der Ansprüche 8 bis 15, **dadurch gekennzeichnet, dass** sie eine Platte (202) zum Abdecken der Kalotte des abzudeckenden Utensils aufweist, wobei diese Platte an ihrer nach der Kalotte zu richten Innenseite mit einem Durchgang versehen ist, der sich zu einer Aufnahme (208) hin öffnet, die innerhalb eines Zapfens (210) ausgebildet ist, der auf der entgegengesetzten Außenseite der Platte steht, wobei die Aufnahme einer Abdeckung und der Zapfen einer identischen Abdeckung dazu ausgelegt sind, ineinander zu greifen.

19. Abdeckung nach Anspruch 18, **dadurch gekennzeichnet, dass** der Zapfen (210) bei oder an seinem Scheitelende einen Kragen (212) aufweist, der eng in die Aufnahme der anderen Abdeckung eingreift, um die so gestapelten Abdeckungen (200, 201) lösbar zu sichern und horizontal zu stabilisieren.
